# EUROPEAN PATENT APPLICATION

(11) **EP 4 821 657 A1**
(43) Date of publication of application: **14.10.2026**
(21) Application number: 26161270.9
(22) Date of filing: 27.02.2026
(51) Int. Cl.: B29C 45/76, G01N 29/14, B29C 48/45, B29C 48/92, G01N 29/44

(54) **ANALYSIS SUPPORT DEVICE FOR RESIN MOLTEN STATE**

(30) Priority: 11.04.2025 JP 2025653600
(71) Applicant: Nissei Plastic Industrial Co., Ltd., Hanishina-gun, Nagano-ken 389-0693 (JP)
(72) Inventor: KOZUKA, Makoto, Hanishina-gun, 389-0693 (JP); MATSUDA, Keisuke, Hanishina-gun, 389-0693 (JP); SAKAKI, Satomi, Hanishina-gun, 389-0693 (JP)
(74) Representative: Berghofer, Benedikt

(57) **Abstract**

An analysis support device (30) for a resin molten state, the analysis support device (30) for a resin molten state being provided in an injection device (10) including a heating cylinder (14), a screw (15) rotatably and axially movably housed in the heating cylinder (14), a screw rotation mechanism (16) rotating the screw (15), and a screw movement mechanism (17) advancing the screw (15),
the analysis support device (30) for a resin molten state being used when a molten state of a resin is measured, the analysis support device (30) for a resin molten state comprising:
a setting screen (36) for setting a measurement condition;
a plurality of AE sensors (32) disposed in the heating cylinder (14) along an axis of the screw (15) and detecting an AE wave generated by the resin; and
an arithmetic unit (33) processing the AE wave detected by the AE sensors (32),
wherein
the setting screen (36) for setting a measurement condition includes setting items including an extrusion metering speed corresponding to a rotation speed of the screw (15), an extrusion metering time corresponding to a time for rotating the screw (15), an extrusion standby time corresponding to a time for stopping the screw (15), and an extrusion start position corresponding to a tip end position of the screw (15) at a start of measurement, and
when the extrusion start position is set, the screw (15) rotates at the extrusion start position without moving in an axial direction.

## Description

### FIELD OF THE INVENTION

The present invention relates to a support device that supports an analysis operation for analyzing a molten state of a resin in a heating cylinder of an injection device.

### BACKGROUND OF THE INVENTION

### [Definition of Injection Device]

An injection device is a part of an injection molding apparatus.

The injection molding apparatus includes a bed, and an injection device and a mold clamping device which are mounted on the bed. The mold clamping device clamps a mold.

The injection device includes a heating cylinder and a screw, plasticizes a resin material (hereinafter, abbreviated as a resin) charged from a drop port at a rear portion of the heating cylinder, and injects the resin in a molten state into the mold by forward movement of the screw.

The resin at room temperature is plasticized into a molten state by the heating cylinder. This plasticization state strongly affects the quality of a molded article. Therefore, it is important to analyze the molten state of the resin in the heating cylinder.

The heating cylinder is a steel cylinder, and the behavior of the resin cannot be visually observed from the outside. In this regard, a visualization technique instead of visual observation is known as disclosed in, for example, Japanese Patent No. 5388996.

In the technique disclosed in Japanese Patent No. 5388996, an AE sensor is provided at a rear portion of a heating cylinder, and the plasticization quality of the resin is detected on the basis of an acoustic signal (AE signal) of the AE sensor. AE stands for acoustic emission.

The technique disclosed in Japanese Patent No. 5388996 has the following problems.

First, only one AE sensor is provided in the heating cylinder. Although the plasticized state of the resin in the vicinity of the AE sensor can be grasped, it is difficult to grasp the plasticized state at a site away from the AE sensor.

The screw incorporated in the heating cylinder moves in an axial direction from a weighing start position to a weighing completion position at the time of plasticization weighing. Due to this movement, the AE wave is disturbed, and the visualization accuracy is lowered.

With the advancement of injection molding technique, there is a need for an analysis support device for a resin molten state, which is capable of grasping a state of a resin in a heating cylinder in a wide range and visualizing the state with high accuracy.

### SUMMARY OF THE INVENTION

An object of the present invention is to provide an analysis support device for a resin molten state, which is capable of grasping a state of a resin in a heating cylinder in a wide range and visualizing the state with high accuracy.

According to a first embodiment of the present invention, there is provided an analysis support device for a resin molten state, the analysis support device for a resin molten state being provided in an injection device including a heating cylinder, a screw rotatably and axially movably housed in the heating cylinder, a screw rotation mechanism rotating the screw, and a screw movement mechanism advancing the screw,
the analysis support device for a resin molten state being used when a molten state of a resin is measured, the analysis support device for a resin molten state, including:
a setting screen for setting a measurement condition;
a plurality of AE sensors disposed in the heating cylinder along an axis of the screw and detecting an AE wave generated by the resin; and
an arithmetic unit processing the AE wave detected by the AE sensors, wherein
the setting screen for setting a measurement condition includes setting items including an extrusion metering speed corresponding to a rotation speed of the screw, an extrusion metering time corresponding to a time for rotating the screw, an extrusion standby time corresponding to a time for stopping the screw, and an extrusion start position corresponding to a tip end position of the screw at a start of measurement, and
when the extrusion start position is set, the screw rotates at the extrusion start position without moving in the axial direction.

In the present invention, a plurality of AE sensors are disposed in the heating cylinder along the axis of the screw. Since there are a plurality of AE sensors, the state of the resin in the heating cylinder is grasped in a wide range.

In addition, when the extrusion start position is set on the setting screen for setting a measurement condition, the screw is rotated at that position and does not move in the axial direction. Since the screw does not move in the axial direction, the AE wave is sufficiently stable.

Therefore, according to the present invention, there is provided an analysis support device for a resin molten state, which is capable of grasping a state of a resin in a heating cylinder in a wide range and visualizing the state with high accuracy.

### BRIEF DESCRIPTION OF THE DRAWINGS

Hereinafter, some preferred embodiments of the present invention will be described in detail with reference to the accompanying drawings, wherein:
FIG. 1 is a diagram illustrating a basic configuration of an injection device and an analysis support device for a resin molten state according to the present invention;
FIG. 2 is a diagram for explaining a setting screen which is a main part of the analysis support device;
FIG. 3A is a view showing a first graph;
FIG. 3B is a view showing a second graph;
FIG. 3C is a view showing a third graph;
FIG. 3D is a view showing a fourth graph;
FIG. 4A is a view showing a fifth graph;
FIG. 4B is a view showing a sixth graph;
FIG. 4C is a view showing a seventh graph;
FIG. 5 is a flowchart explaining a procedure for creating the first and second graphs;
FIG. 6 is a flowchart explaining a procedure for creating the third to seventh graphs;
FIG. 7A is a graph explaining that the technique according to the present invention satisfies the position dependency and rotational speed dependency;
FIG. 7B is a graph explaining that the technique according to the present invention satisfies the position dependency and rotational speed dependency; and
FIG. 8 is a view for explaining the usefulness of a diagnostic graph according to the present invention.

### DETAILED DESCRIPTION OF THE PREFERRED EMBODIMENTS

Embodiments of the present invention will be described below with reference to the accompanying drawings.

### [Injection Device]

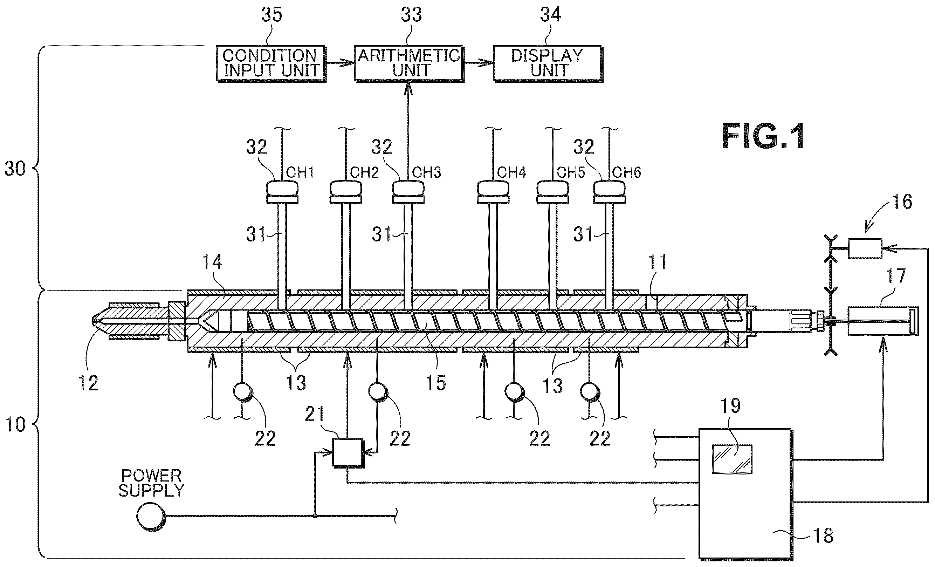

As illustrated in FIG. 1, an injection device 10 is a device including, as basic components, a heating cylinder 14 which includes a drop port 11 through which a resin is charged and a nozzle 12 through which a plasticized resin is injected and around which a heater 13 is wound, a screw 15 rotatably and axially movably housed in the heating cylinder 14, a screw rotation mechanism 16 rotating the screw 15, a screw movement mechanism 17 advancing the screw 15, and an operation panel 18.

### [Operation Panel]

The operation panel 18 performs temperature control of the heating cylinder 14, rotational speed control of the screw rotation mechanism 16, and movement control of the screw movement mechanism 17.

Therefore, the operation panel 18 includes a display 19 capable of performing various settings and incorporates a control unit.

The heaters 13 of about four zones are wound around the outer periphery of the heating cylinder 14. The power supply amount of each heater 13 is controlled by a zone control unit 21 so that the temperature information of a temperature sensor 22 matches the set temperature.

### [Action of Operation Panel]

A resin falls from the drop port 11 into the heating cylinder 14. The fallen resin is guided by the spiral of the screw 15 and moves to the nozzle 12. During this movement, the resin changes from a solid state to a molten state by the heat of the heating cylinder 14 and the shearing heat by the screw 15.

The resin in a molten state is accumulated in the vicinity of the nozzle 12. The reaction force of the accumulated resin causes the screw 15 to retreat. When the retraction distance at this time reaches a predetermined value, the plasticization is terminated. The product of the retraction distance and the inner cross section of the heating cylinder 14 is a metered value (plasticization metering step).

After the measurement, the screw 15 is advanced to inject the plasticized resin into the mold (injection step).

The operation panel 18 executes the above series of steps.

### [Analysis Support Device for Resin Molten State]

Such an injection device 10 is provided with an analysis support device 30 for a resin molten state.

The analysis support device 30 for a resin molten state plays a role of supporting work of analyzing the molten state of the resin.

The analysis support device 30 for a resin molten state includes a plurality of waveguide rods 31 provided at intervals in the heating cylinder 14 along the axis of the screw 15, an AE sensors 32 provided at end portions of the waveguide rods 31 (end portions farther from the heating cylinder 14) and detecting an AE wave generated by a resin, an arithmetic unit 33 performing a predetermined process on the AE waveform detected by the AE sensors 32, a display unit 34 displaying the processed AE waveform in a form of a graph or the like, and a condition input unit 35 capable of inputting various conditions to the arithmetic unit 33.

The arithmetic unit 33, the display unit 34, and the condition input unit 35 are preferably so-called personal computers. Alternatively, the arithmetic unit 33, the display unit 34, and the condition input unit 35 may be the operation panel 18 of the injection device 10 or a mobile terminal using a cloud.

In the case of a personal computer, there is an advantage that software can be freely combined independently of the operation panel 18.

In the case of the operation panel 18, there is an advantage that a personal computer or a mobile terminal is unnecessary although it is necessary to correct software or the like.

Since the mobile terminal has a small processing capability, it is necessary to use an external cloud, but there is an advantage that software can be freely combined independently of the operation panel 18.

### [Predetermined Process by Arithmetic Unit]

The arithmetic unit 33 obtains a resin-present amplitude from the AE wave detected by operating the injection device 10 in a state where the resin is charged, and obtains a resin-absent amplitude from the AE wave detected by operating the injection device 10 in a state where the resin is not charged. A processing of deleting a matching portion between the resin-present amplitude and the resin-absent amplitude is performed, and a process of deleting an audible region is further performed.

### [Condition Input Unit]

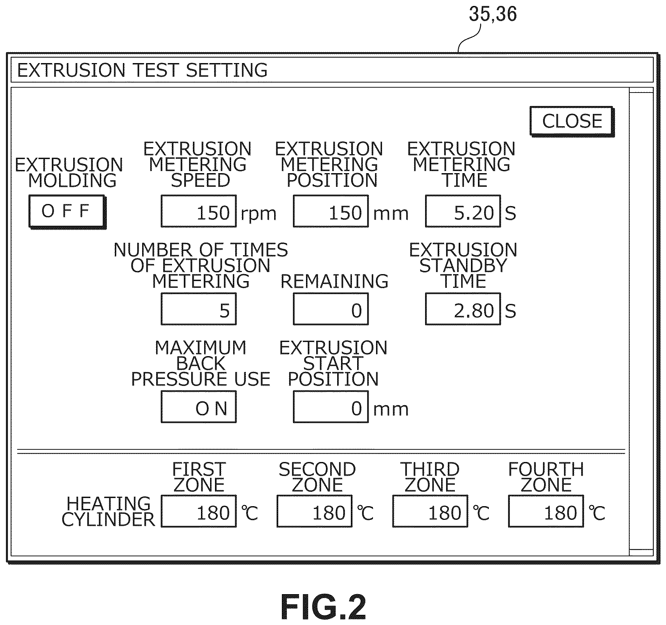

A preferred example of the condition input unit 35 is illustrated in FIG. 2.

As illustrated in FIG. 2, the condition input unit 35 is a setting screen 36 for setting a measurement condition, and is used for setting an extrusion test. That is, during the extrusion test, the setting screen 36 for setting a measurement condition is prioritized over the setting values set on the operation panel (FIG. 1, reference numeral 18).

On the setting screen 36 for setting a measurement condition, a plurality of so-called commands are prepared, and the following settings are possible.

### [Commands]

Extrusion molding: When OFF is clicked, the display is changed to ON, and the extrusion test is started.

Extrusion metering speed: The rotation speed (rpm) of the screw can be set by inputting a numerical value such as 150. The term "rpm" is the number of revolutions per minute.

Extrusion metering position: The plasticization metering position can be set.

Extrusion metering time: The time for rotating the screw is set. The total of the extrusion metering time and the extrusion standby time described later is one cycle time.

Number of times of extrusion metering: The number of times of testing can be set.

Remaining: The number of times of remaining extrusion metering during the test is displayed. The test ends at 0.

Extrusion standby time: The time for stopping the rotation of the screw is set.

Maximum back pressure use: A pressure (back pressure) can be applied to the molten resin by the screw movement mechanism 17 illustrated in FIG. 1. The maximum value of the back pressure is determined by the mechanical capability of the screw movement mechanism 17. When the maximum back pressure use is turned on, the maximum back pressure is selected.

Extrusion start position: Description will be made later.

Heating cylinder: For example, the set temperature of first to fourth zones can be set individually. These settings may be removed from the setting screen 36 for setting a measurement condition by being set on the operation panel 18 of FIG. 1. The removal can simplify the setting screen 36 for setting a measurement condition.

### [Reason for Using Term of Extrusion]

As a result of repeated tests by the present inventors, when the screw 15 illustrated in FIG. 1 moves in the axial direction while rotating, reliability of analysis obtained by disturbance of the AE signal remains in question. On the other hand, it has been confirmed that when only rotation is performed without moving the screw 15 in the axial direction, the AE signal is stabilized and the reliability of analysis is enhanced.

Therefore, in the test of the present invention, only rotation of the screw 15 was performed. Since only rotation is performed, it is close to an extrusion apparatus. Therefore, although the injection device 10 is used, the term "extrusion" is used for the test.

Extrusion start position: The position of the tip end of the screw is set. At this position, the screw is rotated. During the test, the screw is not moved in the axial direction.

### [Various Graphs]

A test is performed by the injection device 10 and the analysis support device 30 for a resin molten state illustrated in FIG. 1, and processing is performed by the arithmetic unit 33, thereby creating various graphs.

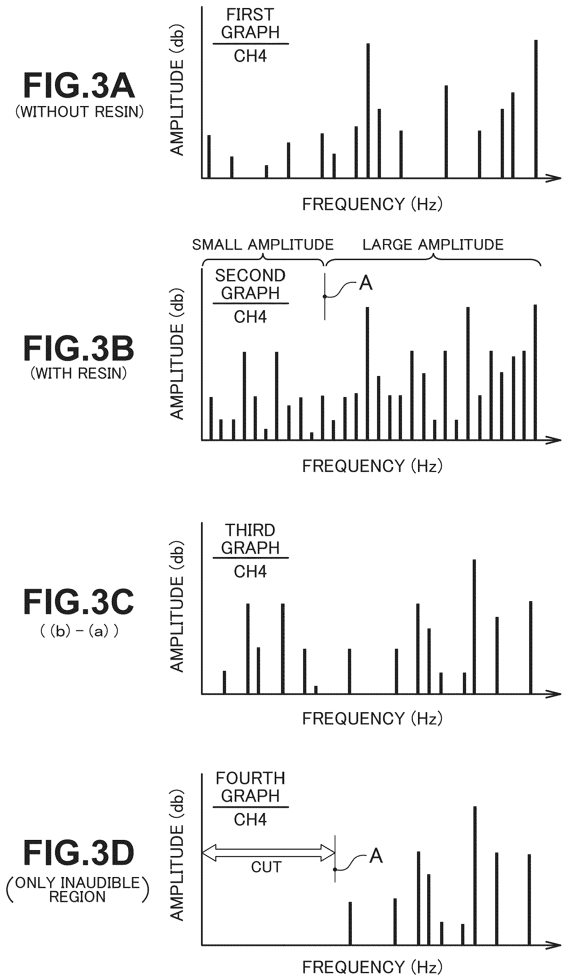

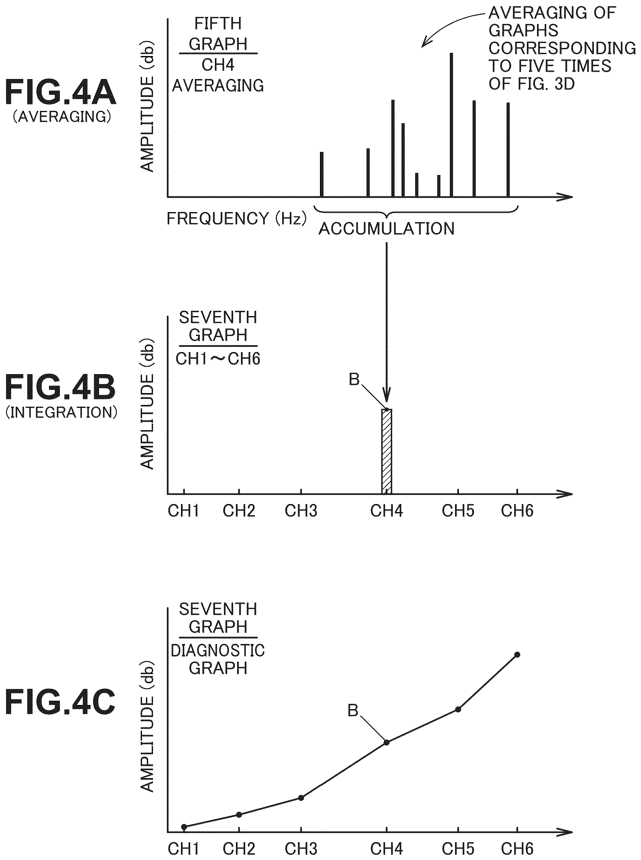

Forms of various graphs to be created will be described with reference to FIGS. 3A to 3D and FIGS. 4A to 4C.

### [First Graph]

A test was performed without charging a resin. As a result of this test, as shown in FIG. 3A, a first graph in which the horizontal axis is the frequency and the vertical axis is the amplitude and which is at, for example, CH4 could be created. The first graph corresponds to one in which so-called raw data is displayed.

### [Second Graph]

A test was performed with charging a resin. As a result of this test, as shown in FIG. 3B, a second graph in which the horizontal axis is the frequency and the vertical axis is the amplitude and which is at, for example, CH4 could be created. The second graph also corresponds to one in which raw data is displayed.

### [Third Graph]

A third graph shown in FIG. 3C could be created by deleting the matching amplitude between the first graph and the second graph.

By deleting the matching amplitude between the first graph and the second graph, noise inherent in FIG. 3B can be deleted, and there is an advantage that the reliability of the analysis can be further improved.

### [Fourth Graph]

When attention is paid to FIG. 3B, the peak of the amplitude is large in a high frequency region of the second graph, and the peak of the amplitude is small in a low frequency region of the second graph. The boundary between both regions is defined as a point A. The present inventors have found that the point A matches a boundary between an audible region and an inaudible region.

Therefore, the present inventors cut an audible region having a small peak. By this cutting, it is expected that the tendency will be stronger. In addition, there is an advantage that the subsequent data processing amount is halved.

Therefore, the audible region was deleted from the third graph to create a fourth graph shown in FIG. 3D.

### [Fifth Graph]

FIG. 3D is created for the number of tests (for example, five times). That is, the number of fourth graphs is five. The five amplitudes are arithmetically averaged for each CH to create a fifth graph shown in FIG. 4A.

This arithmetic averaging can reduce data variation.

### [Sixth Graph]

Next, the amplitude shown in FIG. 4A is accumulated. Specifically, nine bar graphs are simply added.

Although the scale is omitted, the vertical axis in FIG. 4B corresponds to a larger amplitude than the vertical axis in FIG. 4A.

The amplitude accumulated in CH4 on the horizontal axis in FIG. 4B is displayed. The height position of the amplitude is referred to as a point B for convenience.

### Hereinbefore, CH4 has been described.

The processings of FIGS. 3A to 3D and FIGS. 4A and 4B are performed on the remaining CH1 to CH3 and CH5 to CH6, and the accumulated amplitude in each CH is added to FIG. 4B to complete a sixth graph.

### [Seventh Graph]

The completed sixth graph (bar graph) was converted into a line graph, whereby a seventh graph shown in FIG. 4C could be created. The seventh graph corresponds to a "diagnostic graph".

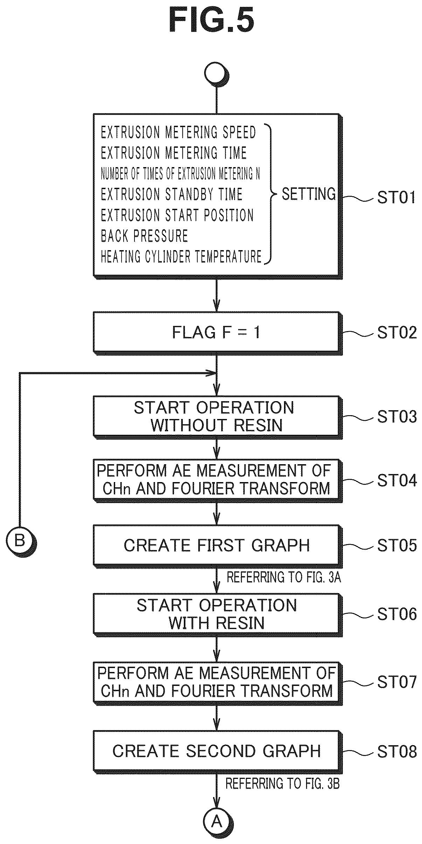

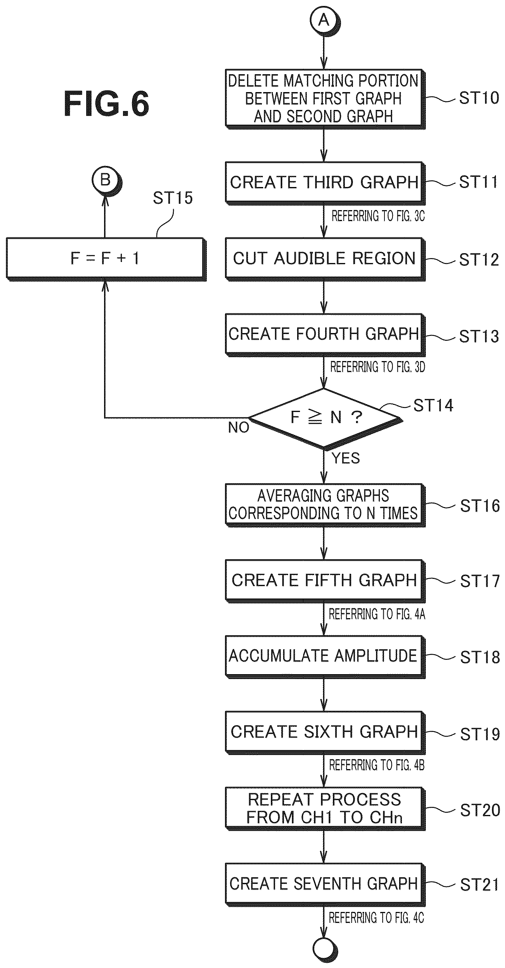

The procedure for creating the first to seventh graphs described above will be described in time series with the flowcharts illustrated in FIGS. 5 and 6.

In step number (hereinafter, abbreviated as ST) 01 of FIG. 5, various conditions are set. That is, various conditions are set on the setting screen 36 for setting a measurement condition in FIG. 2.

In ST02, a flag F is set to 1.

In ST03, the operation is started without charging a resin. An extrusion molding command is turned on on the setting screen 36 for setting a measurement condition in FIG. 2.

In ST04, AE of CHn (for example, CH1 to CH6) is measured, and Fourier transform processing is performed. Then, the first graph is created (ST05).

In ST06, the operation is started with charging a resin.

In ST07, AE of CHn is measured, and Fourier transform processing is performed. Then, the second graph is created (ST08).

ST03 to ST05 and ST06 to ST08 may be interchanged.

In ST10 of FIG. 6, a matching portion between the first graph and the second graph is deleted to create the third graph (ST11).

In the third graph, the audible region is cut to create the fourth graph (ST13).

In ST14, it is checked whether the flag F has reached the number of times of extrusion metering N, and if not, "1" is added to the flag F (ST15).

When YES in ST14, graphs corresponding to N times are averaged (ST16) to create the fifth graph (ST17).

In ST18, the amplitude of the fifth graph is accumulated to determine the amplitude of any CH (ST19). This process is repeated from CH1 to CHn (ST20), and the seventh graph is created (ST21).

In order to verify the position dependency, the rotational speed dependency, and the temperature dependency according to the present invention, tests were performed under the following conditions.

### [Test Conditions]

· Injection device: NEX5EG manufactured by Nippon Jushi Kogyo Co., Ltd.
· Screw outer diameter: 20 mm
· Screw type: full flat
· Extrusion metering speed: 100 or 300 rpm
· Extrusion metering time: 5.20 seconds
· Extrusion standby time: 2.80 seconds
· Number of times of extrusion metering: 5 times
· Maximum back pressure: 56 MPa
· Maximum back pressure use: ON
· Extrusion start position: 0 mm
· Heating cylinder: 180°C or 200°C in all four zones
· Number of AE sensors: 6 (CH1 to CH6)
· Data processing: The arithmetic unit creates the seventh graph on the basis of the flows of FIGS. 5 and 6.

### [Test Results]

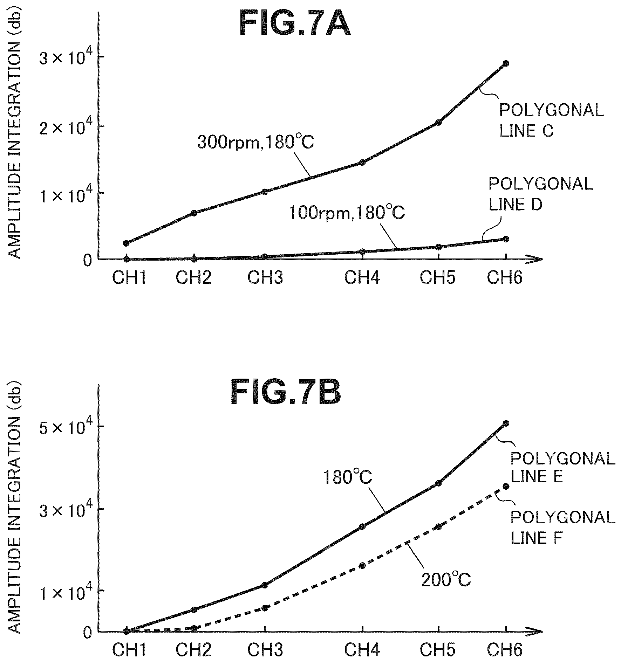

As a result of the test, a polygonal line C and a polygonal line D shown in FIG. 7A and a polygonal line E and a polygonal line F shown in FIG. 7B were obtained.

### [Position Dependency according to Present Invention]

According to the polygonal line C and the polygonal line D shown in FIG. 7A, the amplitude is large at CH6 where the resin is solid, the amplitude at CH5 where plasticization of the resin slightly proceeds is smaller than that at CH6, the amplitude at CH4 where plasticization proceeds is smaller than that at CH5, the amplitude at CH3 where plasticization further proceeds is smaller than that at CH4, the amplitude at CH2 where plasticization further proceeds is smaller than that at CH3, and the amplitude at CH1 where plasticization further proceeds is smaller than that at CH2.

There is a correlation between the plasticization state and the positions of CH6 to CH1. Therefore, according to the present invention, position dependency is improved.

### [Rotational Speed Dependency according to Present Invention]

In FIG. 7A, the screw rotation speed is 300 rpm in the polygonal line C, and the screw rotation speed is 100 rpm in the polygonal line D. The other conditions are common.

It is expected that the amplitude caused by the resin crash sound increases as the screw rotation speed increases, and decreases as the screw rotation speed decreases.

According to FIG. 7A, the polygonal line C having a large rotation speed is larger than the polygonal line D having a small rotation speed. That is, the amplitude is small at 100 rpm and large at 300 rpm. According to the present invention, favorable rotational speed dependency is recognized.

### [Temperature Dependency according to Present Invention]

In FIG. 7B, the temperature setting of the heating cylinder is 180°C in the polygonal line E, and the temperature setting of the heating cylinder is 200°C in the polygonal line F. The other conditions are common.

It is expected that the amplitude caused by the resin crash sound increases as the temperature of the resin decreases, and decreases as the temperature of the resin increases.

According to FIG. 7B, since the polygonal line E in setting of 180°C is large and the polygonal line F in setting of 200°C is small, favorable temperature dependency is recognized according to the present invention.

### [Usefulness of Diagnostic Graph according to Present Invention]

The use of the diagnostic graph obtained in the present invention is arbitrary, and the use described below is an example.

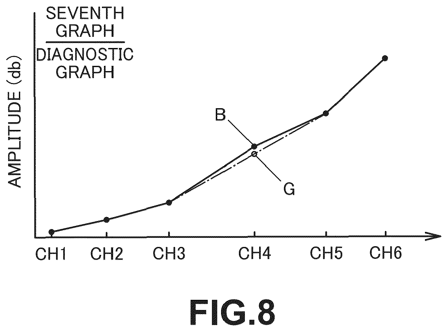

FIG. 8 is a view in which a straight imaginary line is added to the diagnostic graph of FIG. 4C and a point G is added.

As shown in FIG. 8, it can be assumed that the polygonal line becomes a more preferable form by lowering the point B to the point G.

In order to cope with this assumption, the following countermeasure can be considered.

Countermeasure a: The rotation speed of the screw is reduced. While the polygonal line falls overall, it can be a preferred form.

Countermeasure b: The set temperature of the heating cylinder is increased overall. While the polygonal line falls overall, it can be a preferred form.

Countermeasure c: The set temperature only in the zone including CH4 is increased. The polygonal line can be a more preferred form.

Conventionally, an operator observes the state of a molded article, and when the molded article is not a non-defective product (passed product), the operator changes a setting such as changing of heating temperature setting or adjusting of the screw rotation speed on the basis of his/her own experience and knowledge. This change is repeated until a non-defective product is obtained.

When a diagnostic graph as shown in FIG. 8 is added to this, it is expected that this diagnostic graph provides an operator with a hint of setting change and the number of repetitions until a non-defective product is obtained is reduced.

Therefore, it can be said that the diagnostic graph according to the present invention is highly useful.

The present invention described above can be summarized as follows.

As illustrated in FIG. 1, the analysis support device 30 for a resin molten state is provided in the injection device 10 including the heating cylinder 14, the screw 15 rotatably and axially movably housed in the heating cylinder 14, the screw rotation mechanism 16 rotating the screw 15, and the screw movement mechanism 17 advancing the screw 15,
the analysis support device 30 for a resin molten state is used when a molten state of a resin is measured,
the analysis support device 30 for a resin molten state includes:
   the setting screen 36 for setting a measurement condition as illustrated in FIG. 2;
   the plurality of AE sensors 32 disposed in the heating cylinder 14 along an axis of the screw 15 and detecting an AE wave generated by the resin as illustrated in FIG. 1; and
   the arithmetic unit 33 processing the AE wave detected by the AE sensors 32,
   the setting screen 36 for setting a measurement condition illustrated in FIG. 2 includes setting items including an extrusion metering speed corresponding to a rotation speed of the screw 15, an extrusion metering time corresponding to a time for rotating the screw 15, an extrusion standby time corresponding to a time for stopping the screw 15, and an extrusion start position corresponding to a tip end position of the screw 15 at a start of measurement, and
   when the extrusion start position is set, the screw 15 rotates at the extrusion start position without moving in the axial direction.

A plurality of AE sensors 32 are disposed in the heating cylinder 14 along the axis of the screw 15. Since there are a plurality of AE sensors 32, the state of the resin in the heating cylinder 14 can be grasped in a wide range.

In addition, when the extrusion start position is set on the setting screen for setting a measurement condition, the screw 15 is rotated at that position and does not move in the axial direction. Since the screw does not move in the axial direction, the AE wave is sufficiently stable.

Preferably, the setting items further include the maximum back pressure use as illustrated in FIG. 2, and when the maximum back pressure use is selected, measurement is performed by the maximum back pressure of the injection device 10.

When pressure (back pressure) is applied to the resin in a molten state, gas in the resin is released and the resin is densified. It is expected that the quality of a molded article is improved by this gas release and densification.

If the test is performed with three types of the maximum back pressure, a back pressure of 60% of the maximum back pressure, and a back pressure of 30% of the maximum back pressure, the number of tests increases, and the cost related to the test is increased. As a countermeasure, when the test is performed at a back pressure of 50% of the maximum back pressure, the cost related to the test is reduced, but since the test at the maximum back pressure is omitted, the reliability of the analysis decreases.

In the present invention, the test is performed at the maximum back pressure which is considered to be the most severe condition. As a result, the cost related to the test is reduced, and the reliability of the analysis can be improved. That is, it can be said that the present invention is excellent in terms of cost effectiveness.

Note that the number of AE sensors 32 illustrated in FIG. 1 is 6 in the embodiment, but may be increased or decreased. However, the number is 2 or more even in the case of reduction.

The analysis support device for a resin molten state according to the present invention is suitable for an injection device.

## Claims

1. An analysis support device for a resin molten state, the analysis support device for a resin molten state being provided in an injection device including a heating cylinder, a screw rotatably and axially movably housed in the heating cylinder, a screw rotation mechanism rotating the screw, and a screw movement mechanism advancing the screw,
the analysis support device for a resin molten state being used when a molten state of a resin is measured, the analysis support device for a resin molten state comprising:
a setting screen for setting a measurement condition;
a plurality of AE sensors disposed in the heating cylinder along an axis of the screw and detecting an AE wave generated by the resin; and
an arithmetic unit processing the AE wave detected by the AE sensors, wherein
the setting screen for setting a measurement condition includes setting items including an extrusion metering speed corresponding to a rotation speed of the screw, an extrusion metering time corresponding to a time for rotating the screw, an extrusion standby time corresponding to a time for stopping the screw, and an extrusion start position corresponding to a tip end position of the screw at a start of measurement, and
when the extrusion start position is set, the screw rotates at the extrusion start position without moving in an axial direction.

2. The analysis support device for a resin molten state according to claim 1, wherein
the setting items further include maximum back pressure use, and when the maximum back pressure use is selected, measurement is performed by the maximum back pressure of the injection device.
